# EUROPÄISCHE PATENTSCHRIFT

(11) **EP 2 721 662 B1**
(45) Veröffentlichungstag und Bekanntmachung des Hinweises auf die Patenterteilung: **21.01.2015**
(21) Anmeldenummer: 12727310.0
(22) Anmeldetag: 06.06.2012
(51) Int. Cl.: H01M 2/10

(54) **BATTERIE FÜR EIN FAHRZEUG**
BATTERY FOR A VEHICLE
BATTERIE POUR VEHICULE

(30) Priorität: 17.06.2011 DE 102011104499
(43) Veröffentlichungstag der Anmeldung: 23.04.2014
(73) Patentinhaber: Audi AG, 85045 Ingolstadt (DE)
(72) Erfinder: FEES, Heiner, 74321 Bietigheim-Bissingen (DE); TRACK, Andreas, 74343 Sachsenheim (DE); MAISCH, Ralf, 74232 Abstatt (DE)
(74) Vertreter: Herbst, Matthias Heinz
(86) Internationale Anmeldenummer: PCT/EP2012/002398
(87) Internationale Veröffentlichungsnummer: WO 2012/171622

(56) Entgegenhaltungen:
- EP-A1- 1 939 956
- WO-A2-2010/037796
- US-A1- 2008 118 819

## Beschreibung

Die Erfindung betrifft eine Batterie für ein Fahrzeug, welche eine Mehrzahl von Batteriezellen umfasst. Die Batteriezellen bilden einen Stapel. Zwischen zwei Batteriezellen ist jeweils ein eigensteifer und aus einem wasserdichten Material gebildeter Separator angeordnet, welcher die beiden Batteriezellen voneinander elektrisch isoliert. Zumindest zwei Separatoren sind derart miteinander gekoppelt, dass die beiden Separatoren eine der Batteriezellen zu zumindest einer Seite der Batteriezelle hin wasserdicht umschließen.

Die DE 10 2010 045 037 A1 beschreibt eine Batterieanordnung mit einer Mehrzahl von Batteriezellen, wobei zwischen den jeweiligen Batteriezellen Isolationsabstandshalter aus Kunststoff angeordnet sind. Durch einstückig mit dem Isolationsabstandshaltern ausgebildete unterseitige Stege ist eine geschlossene Bodenplatte gebildet. So ist durch die miteinander gekoppelten Isolationsabstandshalter eine jeweilige Batteriezelle zu ihrer Unterseite hin gegen den Zutritt von Wasser geschützt.

Die DE 583 832 A beschreibt eine Trockenbatterie mit einzelnen Fächern für die jeweiligen Batteriezellen. Die Fächer werden ausgebildet, indem ein beispielsweise aus Pappe gebildetes Fachwerk in einen Behälter eingesetzt wird, dessen Innenwände mit noch flüssiger Vergussmasse bedeckt sind. Die gitterartig angeordneten Wände des Fachwerks sind ebenfalls mit einer Vergussmasse in noch flüssigem Zustand versehen, welche sich der mit an den Wänden des Behälters befindenden Vergussmasse vereinigt. So werden für die einzelnen Batteriezellen wasserdicht abgeschlossene Fächer gebildet.

Die DE 20 2010 002 352 U1 beschreibt einen elektrochemischen Energiespeicher mit einem Gehäuse, in welchem elektrochemische Speichermodule angeordnet sind. Ein Aufnahmeraum für die elektrochemischen Speichermodule ist durch ein die Gehäuseumfangswand bildendes rahmenartiges Gehäuseteil und durch einen oberen und eine unteren Gehäuseboden zur Umgebung hin verschlossen. Jedes der Speichermodule umfasst eine Vielzahl von Zellenblöcken, welche wiederum eine Vielzahl von Speicherzellen aufweisen. Eine einzelne Speicherzelle umfasst eine Batteriezelle, welche von einem diese außenumfangseitig umschließenden Kühlmantel umgeben ist. Zwischen einer Außenfläche der Batteriezelle und der Innenfläche des Kühlmantels ist ein Kühlkanal ausgebildet. Die Kühlmäntel sind durch Abschnitte eines Kunststoff-Rohrprofils gebildet.

Die EP 2 284 425 A1 beschreibt eine Batterie für ein Hybridfahrzeug oder ein Elektrofahrzeug. Hierbei sind einzelne Batteriezellen als sog. Coffee-Bag-Zellen ausgestaltet, welche eine flexible, aus einer Folie aufgebaute Hülle umfassen. In der Hülle sind die elektrischen Komponenten einer jeweiligen Batteriezelle angeordnet. Die flexible Hülle dient dem elektrischen Isolieren benachbarter Batteriezellen. In der Batterie ist eine umlaufende Siegelnaht der flexiblen Hülle zwischen jeweils zwei Dichtungsrahmen angeordnet, welche die Siegelnaht mit Druck beaufschlagen. Die Dichtungsrahmen verhindern, dass beim Verpressen der Dichtungsrahmen gegeneinander der Bereich der flexiblen Hülle, welcher die elektrischen Komponenten enthält, mit Druck beaufschlagt wird. Die aneinander anliegenden Dichtungsrahmen versiegeln einen Stapel von Coffee-Bag-Zellen gegen Feuchtigkeit aus der Atmosphäre. Ableitbleche von Elektroden einer jeweiligen Batteriezelle stehen hierbei über die Dichtungsrahmen über und ermöglichen so das elektrische Kontaktieren der Batteriezellen.

Aus dem Stand der Technik sind des Weiteren Fahrzeugbatterien mit runden oder prismatischen Batteriezellen bekannt, welche durch aus einem Kunststoff gebildete Separatoren voneinander elektrisch isoliert sind.

Die DE 10 2007 021 293 A1 beschreibt eine Batterie für ein Elektrofahrzeug, Brennstoffzellenfahrzeug oder Hybridfahrzeug. Einzelne Batteriezellen, welche zu einem Zellenpaket zusammengefasst sind, sind nach außen hin von einem gemeinsamen Gehäuse aus Kunststoff umgeben. Das Gehäuse umfasst einen einseitig offenen Behälter und einen den Behälter verschließenden Deckel, welche beide durch Spritzgießen gefertigt sind.

Aufgabe der vorliegenden Erfindung ist es, eine Batterie der eingangs genannten Art zu schaffen, welche sich einfach zusammenbauen lässt, und bei welcher die Batteriezellen besonders gut geschützt sind.

Diese Aufgabe wird durch eine Batterie mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei der erfindungsgemäßen Batterie für ein Fahrzeug ist zwischen zwei Batteriezellen jeweils ein eigensteifer und aus einem wasserdichten Material gebildeter Separator angeordnet, welcher die beiden Batteriezellen voneinander elektrisch isoliert. Zumindest zwei Separatoren sind derart miteinander gekoppelt, dass die beiden Separatoren eine der Batteriezellen zu zumindest einer Seite der Batteriezelle hin wasserdicht umschließen. Dem liegt die Erkenntnis zugrunde, dass sich durch die zur Potenzialtrennung ohnehin notwendigen Separatoren besonders einfach ein Schutz der Batteriezellen vor einer Beaufschlagung mit Wasser oder Feuchtigkeit realisieren lässt. Es kann dadurch auf eine zusätzlich zu den Separatoren vorgesehene Wand eines Gehäuses verzichtet werden, welche den Stapel der Batteriezellen zu der zumindest einen Seite hin wasserdicht abschließt. Dadurch lässt sich die Batterie besonders einfach und rasch zusammenbauen, und zugleich sind die Batteriezellen durch die Separatoren besonders gut gegen ein Eindringen von Wasser und Luftfeuchtigkeit von außen geschützt. Die Separatoren isolieren die Batteriezellen also nicht nur elektrisch, sondern auch gegenüber Umwelteinflüssen. Die Eigensteifigkeit der Separatoren sorgt dafür, dass die Separatoren wenigstens auf der Seite, zu welcher hin sie die jeweilige Batteriezelle umschließen, eine steife Wand des Gehäuses für den Stapel der Batteriezellen bilden.

Ein besonders weitgehender wasserdichter Abschluss gegenüber der Umgebung ist hierbei dadurch erreicht, dass durch die Separatoren eine geschlossene Bodenplatte und an die Bodenplatte angrenzende, geschlossene Seitenwände gebildet sind. Hierbei ist der Stapel der Batteriezellen in einem von den Seitenwänden umgebenen Aufnahmeraum angeordnet. Dann ist ein nach unten und zu den Seiten hin hermetisch dichtes Gehäuse um den Zellstapel gebildet. Ein solches Gehäuse kann besonders einfach zu einer weiteren Seite hin verschlossen werden, um eine Batterie mit einem zu allen Seiten hin gekapselten Stapel zu schaffen.

Als weiter vorteilhaft hat es sich gezeigt, wenn durch die Separatoren eine Abdeckung des Stapels der Batteriezellen gebildet ist, welche Durchtrittsöffnungen für elektrische Kontakte der Batteriezellen aufweist. Dann sind nämlich die Batteriezellen auch zu ihrer die elektrischen Kontakte aufweisenden Seite hin durch die Abdeckung besonders weitgehend gegen Wasser und Luftfeuchtigkeit geschützt, und dennoch sind die elektrische Kontakte einfach zugänglich.

Um eine wasserdichte Kopplung der Separatoren miteinander zu erreichen, können Stirnseiten der beiden eine jeweilige Batteriezelle umschließenden Separatoren mit einem Dichtmaterial versehen sein. Um für das Dichtmaterial einen Dichtspalt einer vorgegebenen Größe bereitzustellen, können hierbei - bevorzugt einstückig mit einem Grundkörper des jeweiligen Separators ausgebildete - Abstandshalter vorgesehen sein, welche die Stirnseiten auf Abstand voneinander halten.

Das Zusammenfügen der beiden die jeweilige Batteriezelle umschließenden Separatoren ist gemäß einer weiteren vorteilhaften Ausgestaltung der Erfindung dadurch erleichtert, dass die Separatoren wenigstens ein Formschlusselement aufweisen. Beispielsweise kann ein an einem der beiden Separatoren vorgesehener Zapfen in eine korrespondierende Öffnung an dem benachbarten Separator eingeführt werden, um die beiden Separatoren miteinander zu verbinden. Derartige Formschlusselemente erleichtern insbesondere das lagerichtige Zusammenfügen der Separatoren zu einem den Stapel der Batteriezellen umgebenden Gehäuse.

In einer weiteren vorteilhaften Ausgestaltung der Erfindung ist durch die Separatoren eine Führung für ein wasserdichtes Deckelelement bereitgestellt, welches den Stapel der Batteriezellen zu einer Seite hin abschließt. Dann kann nämlich bei der Montage der Batterie das Deckelelement über die Führung aufgeschoben oder in der Führung verrastet werden, um den Stapel einfach und prozesssicher zu dieser Seite hin wasserdicht zu verschließen.

Hierbei hat es sich als vorteilhaft gezeigt, wenn das Deckelelement über eine elastische Dichtung mit den Separatoren verbunden ist. Durch die Elastizität der Dichtung können Fertigungstoleranzen ausgeglichen werden. Zudem können so - beispielsweise thermisch bedingte oder aufgrund von chemischen Vorgängen hervorgerufene - Größenänderungen der Batteriezellen im Betrieb der Batterie kompensiert werden. Zusätzlich zu den elastischen Eigenschaften kann die Dichtung eine Klebewirkung aufweisen, sodass das Deckelelement zusätzlich durch die Dichtung an der Führung fixiert ist. Bevorzugt ist es weiterhin, wenn in das Deckelelement Kontaktelemente zum elektrischen Kontaktieren der Batteriezellen integriert sind. Dann bewirkt das Anbringen des Deckelelements an den Separatoren zugleich das Kontaktieren der Batteriezellen. Zum Schutz können die Kontaktelemente mit einer, insbesondere zu einem Grundkörper des Deckelelements hin abgedichteten, Abdeckung versehen sein.

Damit die Fügebereiche zwischen den eine jeweilige Batteriezelle umschließenden Separatoren keiner Beanspruchung unterliegen, hat es sich als weiter vorteilhaft gezeigt, eine Fixiereinrichtung vorzusehen, welche ein durch die Separatoren gebildetes, den Stapel der Batteriezellen aufnehmendes Gehäuse außenumfangsseitig umgibt. Zudem dient die Fixiereinrichtung dem Zusammenhalt der Separatoren.

Von Vorteil ist es hierbei, wenn die Fixiereinrichtung durch Fixierplatten gebildet ist, welche durch einstückig mit den Separatoren ausgebildete Befestigungselemente mit den Separatoren verbunden sind. Derartige Befestigungselemente können etwa in Form von Stiften oder Domen vorgesehen sein, welche durch in der jeweiligen Fixierplatte vorgesehene Durchtrittsöffnungen hindurchtreten. Durch die Befestigungselemente lässt sich eine lagegesicherte Anordnung der Separatoren relativ zueinander vorgeben, welche besonders dauerhaft ist. Wenn zwischen zwei wasserdicht miteinander gekoppelten Separatoren ein Dichtmaterial vorgesehen ist, so sorgen Fixierplatten, durch welche die Befestigungselemente hindurchtreten dafür, dass das in einem jeweiligen Dichtspalt angeordnete Dichtmaterial keiner mechanischen Belastung unterliegt. Die Separatoren werden also durch die Fixierplatten von außen kraftfrei gehalten.

Schließlich hat es sich als vorteilhaft gezeigt, wenn durch die Separatoren wenigstens ein Aufnahmeraum für eine Kühleinrichtung zum Kühlen der Batteriezellen gebildet ist. Dies ermöglicht eine besonders einfache Montage der Kühleinrichtung an den Stapel der Batteriezellen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ausschnittsweise eine Schnittansicht durch eine Batterie für ein Fahrzeug, bei welcher zwischen jeweiligen Batteriezellen vorgesehene Separatoren ein Gehäuse für die Batteriezellen bilden;
- Fig. 2: in einer Perspektivansicht die Batterie gemäß Fig. 1;
- Fig. 3: perspektivisch einen Separator in einer Frontansicht;
- Fig. 4: perspektivisch einen Separator in einer rückwärtigen Ansicht;
- Fig. 5: in einer Perspektivansicht einen weiteren Separator, welcher einen Stapel von Batteriezellen endseitig abschließt;
- Fig. 6: in einer Perspektivansicht den am anderen Ende des Zellstapels vorgesehen endseitigen Separator;
- Fig. 7: eine Draufsicht auf einen Fügebereich zweier miteinander unter Ausbildung eines Dichtspalts gekoppelter Separatoren;
- Fig. 8: eine Schnittansicht entlang einer Linie VIII - VIII in Fig. 7;
- Fig. 9: in einer perspektivischen Ansicht die Unterseite eines Deckels der Batterie gemäß Fig. 2;
- Fig. 10: den Deckel gemäß Fig. 9 in einer perspektivischen Draufsicht auf seine Oberseite;
- Fig. 11: eine weitere Schnittansicht der Batterie gemäß Fig. 2; und
- Fig. 12: eine weitere Schnittansicht der Batterie gemäß Fig. 2 im Bereich eines Hochvoltanschlusses.

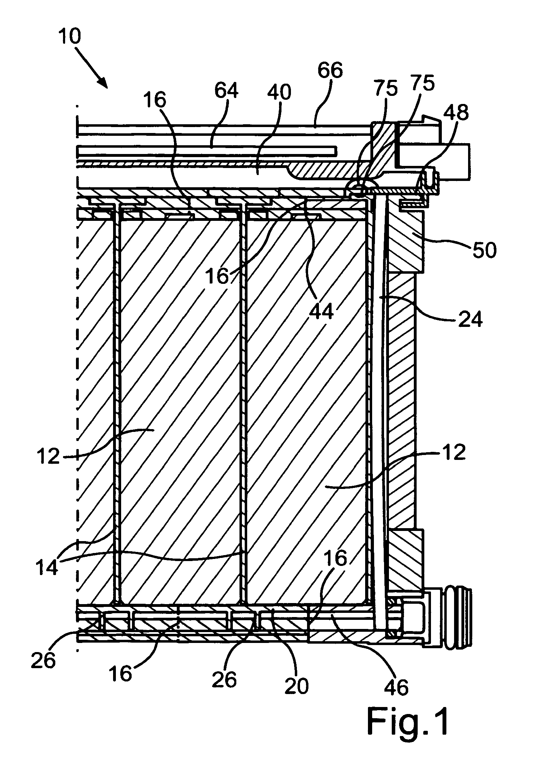

Fig. 1 zeigt ausschnittsweise eine Batterie 10 zum Speichern und Freisetzen von Antriebsenergie für ein Fahrzeug. Batteriezellen 12 der Batterie 10, welche insbesondere als Lithium-Ionen-Batterie ausgebildet sein kann, bilden einen Zellstapel. Die Batteriezellen 12, welche rund oder wie vorliegend beispielhaft gezeigt prismatisch, insbesondere quaderförmig, ausgebildet sein können, sind voneinander durch einen jeweiligen Separator 14 elektrisch isoliert, welcher auch als Spacer bezeichnet wird. Die aus einem eigensteifen und wasserdichten Kunststoff gebildeten Separaotoren 14 sorgen dafür, dass die elektrisch leitfähigen Hüllen der Batteriezellen 12 nicht miteinander in Kontakt geraten. Um die elektrisch leitfähigen Hüllen der Batteriezellen 12 herum kann zur Sicherheit zusätzlich eine weitere elektrische Isolierung, etwa in Form eines Schrumpfschlauchs, vorgesehen sein.

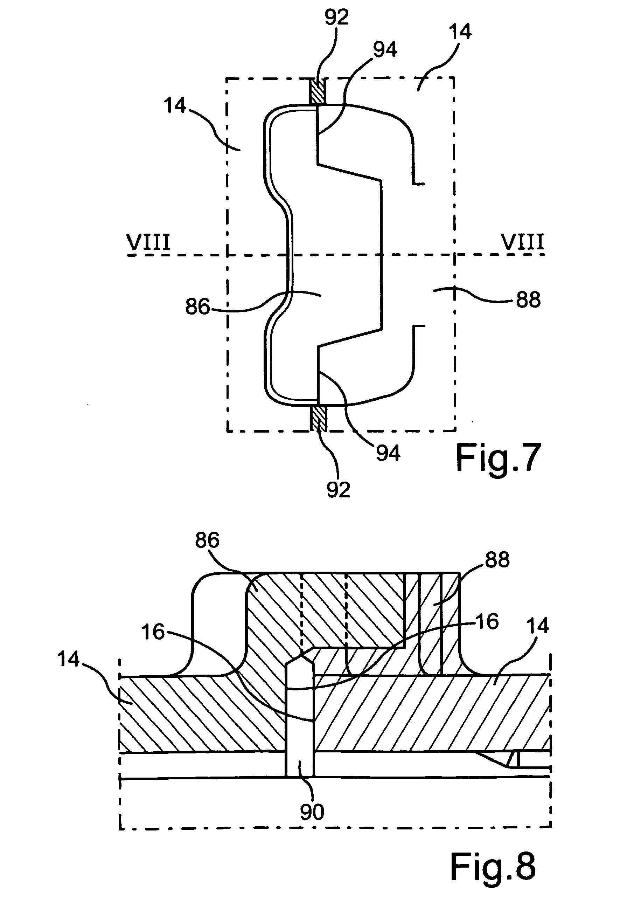

Vorliegend sind die benachbarten Separatoren 14, zwischen welchen eine jeweilige Batteriezelle 12 aufgenommen ist, an Stirnseiten 16 mit einer Dichtmasse 92 versehen (vgl. Fig. 7) und so dichtsitzend miteinander gekoppelt. Dadurch bilden die Separatoren 14 ein die jeweilige Batteriezelle 12 zu zwei Seiten hin wasserdicht umschließendes Gehäuse. Auch der die Batteriezellen 12 umfassende Zellstapel ist so von einem durch die Separatoren 14 gebildeten wasserdichten Gehäuse nach Art eines nach oben offenen Behältnisses umgeben. Dieses Gehäuse verhindert einen Zutritt von Wasser oder Feuchtigkeit, insbesondere Luftfeuchtigkeit, zu den Batteriezellen 12 von der Umgebung der Batterie 10 her.

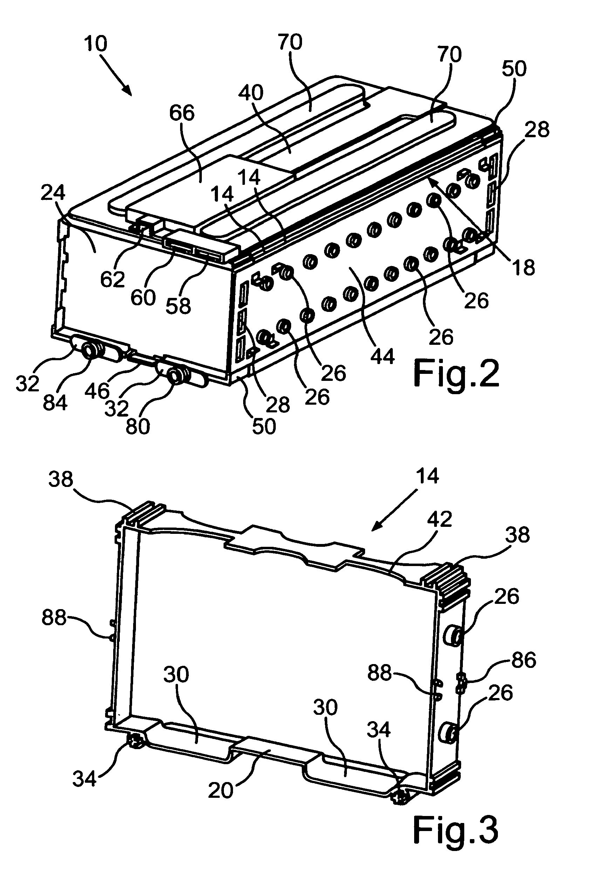

Insbesondere aus Fig. 2 geht hervor, dass durch die miteinander gekoppelten Separatoren 14 eine geschlossene Seitenwand 18 des Gehäuses für den Zellstapel gebildet ist. Die Separatoren 14 bilden auch eine geschlossene Bodenplatte 20 (vgl. Fig. 3) des Gehäuses, auf welcher die Batteriezellen 12 stehen. Die gegenüber Wasser und Luftfeuchtigkeit hermetisch geschlossenen Seitenwände 18 und die hermetisch geschlossene Bodenplatte 20 sorgen dafür, dass von unten und von den Seiten her kein Wasser hin zu den Batteriezellen 12 gelangen kann.

Fig. 2 zeigt eine außen auf die Seitenwand 18 aufgebrachte Seitenplatte 22, welche im Zusammenwirken mit jeweiligen Endplatten 24 das durch die Separatoren 14 gebildete Gehäuse für den Stapel der Batteriezellen 12 umgibt. Diese Fixierplatten sorgen unter anderem dafür, dass im Betrieb der Batterie 10 die zwischen den Stirnseiten 16 benachbarter Separatoren 14 angeordnete Dichtmasse 92 keiner Belastung ausgesetzt ist. Hierfür sind vorliegend an jedem Separator 14 zu jeder Seite hin zwei Buchsen oder Dome 26 vorgesehen, welche durch in den Seitenplatten 22 vorgesehene Durchtrittsöffnungen hindurchtreten. Die Dome 26 werden nach dem Anbringen der Seitenplatten 22 so wie die Köpfe von Nieten flachgedrückt, etwa durch Heißverstemmen, um die Seitenplatte 22 sicher an der Seitenwand 18 zu fixieren.

Die Seitenplatten 22 können insbesondere aus einer Aluminiumlegierung gebildet sein, während die Endplatten 24 bevorzugt aus einem Federstahl gebildet sind. Wie aus Fig. 1 hervorgeht, können die Endplatten 24 vorgespannt, also zu dem Zellstapel hin leicht gewölbt ausgebildet sein, um den Betriebsdruck der Batteriezellen 12 aufnehmen zu können. Dieser kann zu Beginn der Lebensdauer der Batterie 10 bei 4 bis 6 kN und gegen Ende der Lebensdauer bei 9 bis 11 kN liegen. Die Seitenplatten 22 halten über in diesen vorgesehene Laschen, in welche Zungen 28 der Endplatten 24 eingesteckt sind, die Endplatten 24.

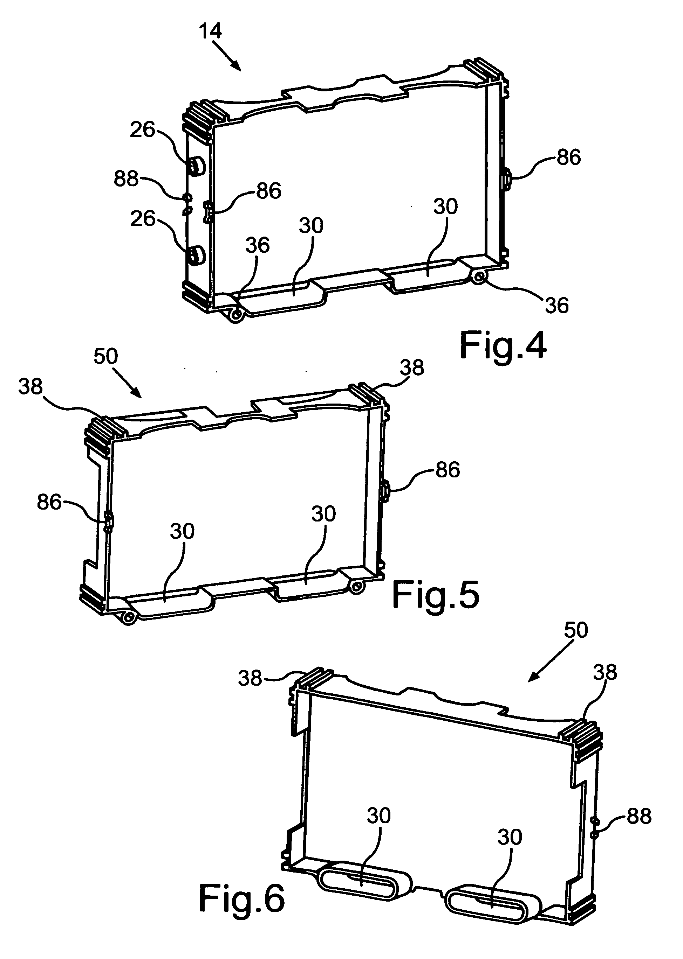

Fig. 3 zeigt einen einzelnen Separator 14 in einer Perspektivansicht. Durch die Separatoren 14 sind im Bereich der Bodenplatte 20 des durch diese gebildeten Gehäuses zwei flache, schachtförmige Durchlässe 30 gebildet, in welchen im Betrieb der Batterie 10 zwei Kühlzwecken dienende Profilteile 32 aufgenommen sind (vgl. Fig. 2). Die Profilteile 32 werden zum Kühlen der Batteriezellen 12 mit einem Kühlmittel beaufschlagt. Neben den Durchlässen 30 sind Zapfen 34 vorgesehen, welche zum formschlüssigen Verbinden zweier Separatoren 14 miteinander in korrespondierende Vertiefungen 36 (vgl. Fig. 4) des jeweils benachbarten Separators 14 eingeführt werden.

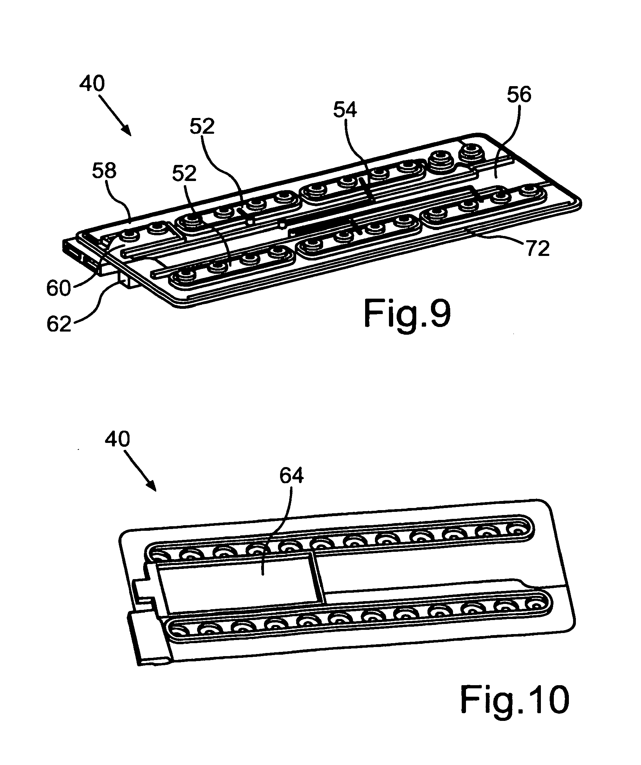

An einer Oberseite der Separatoren 14 sind Führungsschienen 38 vorgesehen, entlang welcher beim Montieren eines Deckels 40 (vgl. Fig. 9) auf das durch die Separatoren 14 gebildete Gehäuse der Deckel 40 aufgeschoben werden kann (vgl. Fig. 2).

An der dem Deckel 40 zugewandten Oberseite der Separatoren 14 vorgesehene Aussparungen 42 (vgl. Fig. 3) sorgen dafür, dass elektrische Pole 44 (vgl. Fig. 1) der Batteriezellen 12 durch das durch die Separatoren 14 gebildete Gehäuse hindurch kontaktiert werden können. Der Deckel 40 ist über eine flexible Dichtmasse 75 gegen Wasser und Feuchtigkeit hermetisch dicht mit den Separatoren 14 verbunden (vgl. Fig. 1). So ist im Zusammenwirken des Deckels 40 mit dem durch die Separatoren 14 gebildeten Gehäuse eine rundum wasserdichte Kapselung des Stapels der Batteriezellen 12 erreicht.

Fig. 2 zeigt des Weiteren eine unterhalb der Bodenplatte 20 des durch die Separatoren 14 gebildeten Gehäuses für die Batteriezellen 12 angeordnete Fixierplatte 46, welche ebenso wie die Seitenplatten 22 an der Endplatte 24 fixiert ist und die Endplatten 24 hält. Unterhalb des Deckels 40 ist ein weiterer solcher plattenförmiger Fixierstreifen 48 vorgesehen (vgl. Fig. 1).

Fig. 5 und Fig. 6 zeigen Separatoren 50, welche das Gehäuse für den Stapel der Batteriezellen 12 zu den jeweiligen Endplatten 24 hin abschließen. An den Separatoren 50 sind ebenfalls die Führungsschienen 38 für den Deckel 40 und die Durchlässe 30 für die Profilteile 32 vorgesehen. Auch die endseitigen Separatoren 50 sind aus einem eigensteifen und wasserdichten Kunststoff gebildet.

Die Separatoren 14 weisen Vorsprünge 86 und Aufnahmen 88 für die Vorsprünge 86 benachbarter Separatoren 14 auf (vgl. Fig. 7). Die formschlüssig in den korrespondierenden Aufnahmen 88 des benachbarten Separators 14 aufnehmbaren Vorsprünge 86 erleichtern das Zusammenfügen der Separatoren 14. In Anlagebereichen 94 liegen die Vorsprünge 86 und die Aufnahmen 88 aneinander an.

Die Vorsprünge 86 stehen - in die Montagerichtung beim Zusammenfügen der Separatoren 14 gesehen - bereichsweise über die Stirnseiten 16 der Separatoren 14 über. Dadurch werden bei miteinander gekoppelten Separatoren 14 deren Stirnseiten 16 unter Ausbildung eines Dichtspalts 90 (vgl. Fig. 8) auf Abstand zueinander gehalten. In den Dichtspalt 90 ist die Dichtmasse 92 nach Art eines Fugenmaterials eingebracht. Die Dichtmasse 92 ist im Betrieb der Batterie 10 keiner Zugspannung ausgesetzt. Die Seitenplatten 22, durch welche die Dome 26 hindurchtreten (vgl. Fig. 2), fixieren nämlich die Separatoren 14, 50 in ihrer Lage relativ zueinander. Die endseitigen Separatoren 50 weisen entweder die Vorsprünge 86 (vgl. Fig. 5) oder die Aufnahmen 88 (vgl. Fig. 6) auf.

Fig. 9 zeigt den Deckel 40 in einer Ansicht von unten. In den Deckel 40, dessen Grundkörper bevorzugt aus einem Kunststoff gebildet ist, sind elektrisch leitende Sammelschienen 52 integriert, welche auch als "Busbars" bezeichnet werden. Die Sammelschienen 52 sind mit den elektrischen Polen 44 der Batteriezellen 12 verbunden, beispielsweise durch Verschrauben. In den Deckel 40 sind auch Leitungen 54 integriert, etwa in Form eines gebondeten oder geschweißten Stanzgitters, über welche die Zellspannung der einzelnen Batteriezellen 12 erfasst werden kann.

Über einen in dem Deckel 40 vorgesehenen Gaskanal 56 kann aus einer Batteriezelle 12 austretendes heißes Gas abgeführt werden. Ein negativer und ein positiver Hochvoltanschluss 58, 60 ist ebenfalls in dem Deckel 40 vorgesehen, wobei beide Hochvoltanschlüsse 58, 60 an derselben Seite der Batterie 10 angeordnet sind. Neben den beiden Hochvoltanschlüssen 58, 60 ist ein Niedrigvoltanschluss 62 vorgesehen, über welchen eine in den Deckel 40 integrierte Steuerungsplatine 64 versorgt wird (vgl. Fig. 10).

Die Steuerungsplatine 64 ist in der Batterie 10 unterhalb einer Abdeckung 66 angeordnet (vgl. Fig. 2), welche in ihrem Anlagebereich an den Grundkörper des Deckels 40 mit diesem mittels eines dichtenden Klebstoffs verklebt ist (vgl. Fig. 1).

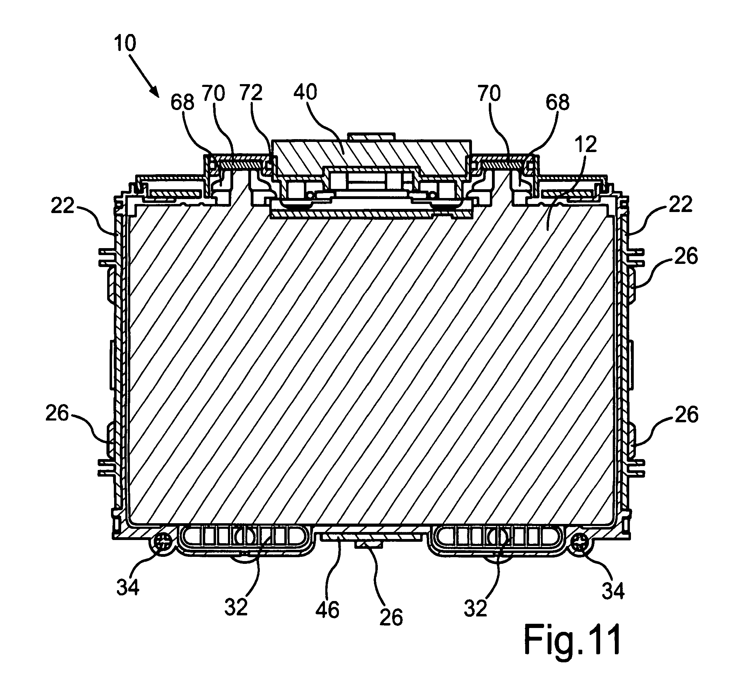

Zum Abdecken von die Sammelschienen 52 mit den elektrischen Polen 44 der Batteriezellen 12 verbindenden Schrauben 68 (vgl. Fig. 11) sind Abdeckungen 70 vorgesehen. Die Abdeckungen 70 können durchgängig ausgebildet sein (vgl. Fig. 2), oder es kann je Sammelschiene 52 eine separate Abdeckung vorgesehen sein. Auch die Abdeckungen 70 sind zu dem Grundkörper des Deckels 40 hin durch ein Dichtmaterial 72 abgedichtet (vgl. Fig. 11).

Fig. 9 zeigt zudem eine an der Unterseite des Deckels 40 ausgebildete Rastnase 74, welche bei der Montage des Deckels 40 in die an den Separatoren 14, 50 vorgesehenen Führungsschienen 38 eingebracht, insbesondere eingeführt, wird.

Insbesondere aus Fig. 11 ist ersichtlich, wie die beiden Profilteile 32, welche als mit Rippen versehene Flachrohre ausgebildet sind, in den durch die Separatoren 14 gebildeten Durchlässen 30 oder Aufnahmeräumen angeordnet sind. Zudem ist gut erkennbar, wie die an den Separatoren 14 vorgesehenen Dome 26 durch die Seitenplatten 22 bzw. die bodenseitige Fixierplatte 46 hindurchtreten.

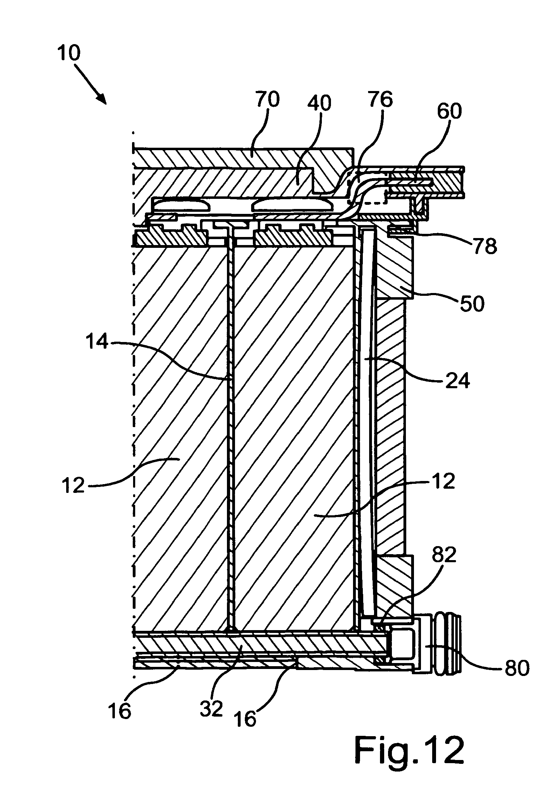

Wie in Fig. 12 zu sehen, kann in einem Bereich des Deckels 40, in welchem ein als Kontaktzunge ausgebildetes Ende des Hochvoltanschlusses 60 angeordnet ist, eine abdichtende Vergussmasse 76 vorgesehen sein. Des Weiteren kann zum umlaufenden Abdichten des Gehäuses gegenüber dem Deckel 40, welcher insbesondere mittels eines elastischen und dichtenden Klebstoffs mit den Separatoren 14, 50 verklebt sein kann, eine Leiste 78 vorgesehen sein. Diese Leiste 78 kann auch einstückig mit dem jeweiligen endseitigen Separator 50 ausgebildet sein.

Ein zum Beaufschlagen der Profilteile 32 mit einem Kühlmittel vorgesehener Kühlmittelanschluss 80 ist über einen Dichtring 82 dicht sitzend mit dem jeweiligen Profilteil 32 gekoppelt. Der Dichtring 82 ist im endseitigen Separator 50 aufgenommen.

Über einen ersten solchen Kühlmittelanschluss 84 wird das Kühlmittel der Batterie 10 zugeführt (vgl. Fig. 2). Über den zweiten, am zweiten Profilteil 32 vorgesehenen Kühlmittelanschluss 80 wird das erwärmte Kühlmittel wieder aus der Batterie 10 abgeführt.

## Patentansprüche

1. Batterie für ein Fahrzeug, mit einer Mehrzahl von einen Stapel bildenden Batteriezellen (12), wobei zwischen zwei Batteriezellen (12) jeweils ein eigensteifer und aus einem wasserdichten Material gebildeter Separator (14) angeordnet ist, welcher die beiden Batteriezellen (12) voneinander elektrisch isoliert, und wobei zumindest zwei Separatoren (14, 50) derart miteinander gekoppelt sind, dass die beiden Separatoren (14, 50) eine der Batteriezellen (12) zu zumindest einer Seite der Batteriezelle (12) hin wasserdicht umschließen, wobei durch die Separatoren (14, 50) eine geschlossene Bodenplatte (20) gebildet ist,
wobei durch die Separatoren (14, 50) an die Bodenplatte (20) angrenzende, geschlossene Seitenwände (18) gebildet sind, wobei der Stapel der Batteriezellen (12) in einem von den Seitenwänden (18) umgebenen Aufnahmeraum angeordnet ist, sodass durch die Separatoren (14, 50) ein nach unten und zu den Seiten hin hermetisch dichtes Gehäuse um den Stapel der Batteriezellen (12) gebildet ist,
**dadurch gekennzeichnet, dass**
durch wenigstens einen Abstandshalter (86, 88) auf Abstand voneinander gehaltene Stirnseiten (16) der beiden eine jeweilige Batteriezelle (12) umschließenden Separatoren (14, 50) mit einem Dichtmaterial (92) versehen sind.

2. Batterie nach Anspruch 1,
**dadurch gekennzeichnet, dass**
eine durch die Separatoren (14, 50) gebildete Abdeckung des Stapels der Batteriezellen (12) Durchtrittsöffnungen (42) für elektrische Kontakte (44) der Batteriezellen (12) aufweist.

3. Batterie nach Anspruch 1 oder 2,
**dadurch gekennzeichnet, dass**
der wenigstens eine Abstandshalter (86, 88) einstückig mit einem Grundkörper des jeweiligen Separators (14, 50) ausgebildet ist.

4. Batterie nach einem der Ansprüche 1 bis 3,
**gekennzeichnet durch**
wenigstens ein Formschlusselement (34, 36) zum Zusammenfügen der beiden eine jeweilige Batteriezelle (12) umschließenden Separatoren (14, 50).

5. Batterie nach einem der Ansprüche 1 bis 4,
**dadurch gekennzeichnet, dass**
durch die Separatoren (14, 50) eine Führung (38) für ein wasserdichtes Deckelelement (40) bereitgestellt ist, welches den Stapel der Batteriezellen (12) zu einer Seite hin abschließt.

6. Batterie nach Anspruch 5,
**dadurch gekennzeichnet, dass**
das Deckelelement (40) über eine elastische, insbesondere durch einen Klebstoff bereitgestellte, Dichtung (75) mit den Separatoren (14, 50) verbunden ist.

7. Batterie nach Anspruch 5 oder 6,
**dadurch gekennzeichnet, dass**
das Deckelelement (40), insbesondere mittels einer Abdeckung (70) abgedeckte, Kontaktelemente (52) zum elektrischen Kontaktieren der Batteriezellen (12) aufweist.

8. Batterie nach einem der Ansprüche 1 bis 7,
**gekennzeichnet durch**
eine Fixiereinrichtung (22, 24, 46, 48), welche ein **durch** die Separatoren (14, 50) gebildetes, den Stapel der Batteriezellen (12) aufnehmendes Gehäuse außenumfangsseitig umgibt.

9. Batterie nach Anspruch 8,
**dadurch gekennzeichnet, dass**
die Fixiereinrichtung durch Fixierplatten (22, 24, 46, 48) gebildet ist, welche durch einstückig mit den Separatoren (14) ausgebildete Befestigungselemente (26) mit den Separatoren (14) verbunden sind.

10. Batterie nach einem der Ansprüche 1 bis 9,
**dadurch gekennzeichnet, dass**
durch die Separatoren (14, 50) wenigstens ein Durchlass (30) für eine Kühleinrichtung (32) zum Kühlen der Batteriezellen (12) gebildet ist.

## Claims

1. Battery for a vehicle, comprising a plurality of battery cells (12) forming a stack, one inherently rigid separator (14) being arranged between each two battery cells (12), which separator is formed of a water-tight material and electrically insulates the two battery cells (12) from each other, and at least two separators (14, 50) being intercoupled such that the two separators (14, 50) surround one of the battery cells (12) towards at least one side of the battery cell (12) in a water-tight manner, a closed base plate (20) being formed by the separators (14, 50),
closed side walls (18), which adjoin the base plate (20), being formed by the separators (14, 50), the stack of battery cells (12) being arranged in a receiving space enclosed by the side walls (18) so that a housing, which is hermetically sealed downwards and towards the sides, is formed around the stack of battery cells (12) by the separators (14, 50), **characterised in that** end faces (16), which are held at a distance from one another by at least one spacer (86, 88), of the two separators (14, 50) surrounding respective battery cells (12) are provided with a sealing material (92).

2. Battery according to claim 1, **characterised in that** a cover, formed by the separators (14, 50), of the stack of battery cells (12) comprises throughopenings (42) for electrical contacts (44) of the battery cells (12).

3. Battery according to either claim 1 or claim 2, **characterised in that** the at least one spacer (86, 88) is formed integrally with a main body of each separator (14, 50).

4. Battery according to any of claims 1 to 3, **characterised by** at least one interlocking element (34, 36) for joining together the two separators (14, 50) surrounding respective battery cells (12).

5. Battery according to any of claims 1 to 4, **characterised in that** a guide (38) for a water-tight cover element (40) is provided by the separators (14, 50) and closes the stack of battery cells (12) towards one side.

6. Battery according to claim 5, **characterised in that** the cover element (40) is connected to the separators (14, 50) by means of a resilient seal (75), which is in particular provided by an adhesive.

7. Battery according to either claim 5 or claim 6, **characterised in that** the cover element (40) comprises contact elements (52), which are in particular covered by means of a cover (70), for electrically contacting the battery cells (12).

8. Battery according to any of claims 1 to 7, **characterised by** a fixing device (22, 24, 46, 48) which encloses a housing on the outer circumference thereof, which housing is formed by the separators (14, 50) and receives the stack of battery cells (12).

9. Battery according to claim 8, **characterised in that** the fixing device is formed by fixing plates (22, 24, 46, 48) which are connected to the separators (14) by fastening elements (26) which are formed integrally with the separators (14).

10. Battery according to any of claims 1 to 9, **characterised in that** at least one passage (30) for a cooling device (32) for cooling the battery cells (12) is formed by the separators (14, 50).

## Revendications

1. Batterie pour un véhicule, comprenant une pluralité d'éléments de batterie (12) formant un empilement, dans laquelle on dispose entre deux éléments de batterie (12), respectivement, un séparateur rigide (14) formé d'un matériau étanche à l'eau, qui isole électriquement les deux éléments de batterie (12) l'un de l'autre, et dans laquelle au moins deux séparateurs (14, 50) sont couplés l'un à l'autre de sorte que les deux séparateurs (14, 50) entourent de manière étanche à l'eau l'un des éléments de batterie (12) sur au moins un côté de l'élément de batterie (12), dans laquelle une plaque de base fermée (20) est formée par les séparateurs (14, 50), dans laquelle des parois latérales fermées (18) limitrophes de la plaque de base (20) sont formées par les séparateurs (14, 50), dans laquelle l'empilement des éléments de batterie (12) est aménagé dans un espace récepteur entouré par les parois latérales (18) de sorte que soit formé par les séparateurs (14, 50) un boîtier hermétiquement étanche vers le bas et sur les côtés, autour de l'empilement des éléments de batterie (12),
**caractérisée en ce que** :
les faces avant (16) - maintenues à distance mutuelle par au moins un écarteur (86, 88) - des deux séparateurs (14, 50) entourant un élément de batterie respectif (12) sont pourvues d'un matériau étanche (92).

2. Batterie selon la revendication 1,
**caractérisée en ce que** :
un recouvrement - formé par les séparateurs (14, 50) - de l'empilement d'éléments de batterie (12) présente des ouvertures de passage (42) pour des contacts électriques (44) des éléments de batterie (12).

3. Batterie selon la revendication 1 ou la revendication 2,
**caractérisée en ce que** :
le au moins un écarteur (86, 88) est formé d'une seule pièce avec un corps de base du séparateur respectif (14, 50).

4. Batterie selon l'une quelconque des revendications 1 à 3,
**caractérisée par** :
au moins un élément mécanique (34, 36) pour assembler les deux séparateurs (14, 50) entourant un élément de batterie respectif (12).

5. Batterie selon l'une quelconque des revendications 1 à 4,
**caractérisée en ce que** :
les séparateurs (14, 50) forment un guide (38) pour un élément de recouvrement étanche à l'eau (40) qui ferme l'empilement des éléments de batterie (12) sur un côté.

6. Batterie selon la revendication 5,
**caractérisée en ce que** :
l'élément de recouvrement (40) est relié aux séparateurs (14, 50) via un joint étanche (75), en particulier formé par une colle.

7. Batterie selon la revendication 5 ou la revendication 6,
**caractérisée en ce que** :
l'élément de recouvrement (40) présente des éléments de contact (52) recouverts en particulier par un recouvrement (70) pour la mise en contact électrique des éléments de batterie (12).

8. Batterie selon l'une quelconque des revendications 1 à 7,
**caractérisée par** :
un dispositif de fixation (22, 24, 46, 48) qui entoure côté périphérie externe un boîtier formé par les séparateurs (14, 50) et recevant l'empilement des éléments de batterie (12).

9. Batterie selon la revendication 8,
**caractérisée en ce que** :
le dispositif de fixation est formé par des plaques de fixation (22, 24, 46, 48) qui sont reliées aux séparateurs (14) par des éléments de fixation (26) formés d'un seul tenant avec les séparateurs (14).

10. Batterie selon l'une quelconque des revendications 1 à 9,
**caractérisée en ce que** :
au moins un passage (30) est formé par les séparateurs (14, 50) pour un dispositif de refroidissement (32) destiné à refroidir les éléments de batterie (12) .
